# EUROPÄISCHE PATENTANMELDUNG

(11) **EP 1 355 058 A2**
(43) Veröffentlichungstag der Anmeldung: **22.10.2003**
(21) Anmeldenummer: 03006411.7
(22) Anmeldetag: 21.03.2003
(51) Int. Cl.: F02M 25/07, F28F 27/02

(54) **Kühler für ein dem Hauptabgasstrom eines Verbrennnungsmotors entnommenes Abgas**

(30) Priorität: 15.04.2002 DE 10216773
(71) Anmelder: Benteler Automobiltechnik GmbH, 33104 Paderborn (DE)
(72) Erfinder: Lange, Rolf, 33154 Salzkotten (DE); Spinler, Thomas, 59939 Olsberg (DE); Kevenhörster, Michael, 34441 Warburg (DE)
(74) Vertreter: Bockermann, Rolf, Dipl.-Ing.

(57) **Zusammenfassung**

Der Kühler (1) für ein dem Hauptabgasstrom (HAG) eines Verbrennungsmotors (2) zwischen dem Motorauslass (3) und einer Turbine (4) eines Abgasturboladers (5) entnommenes und nach der Kühlung der Frischluft (FL) nach einem Ladeluftkühler (6) wieder beigemischtes Abgas (AG) weist von einer Abgasleitung (7, 22) abzweigende Kühlrohre in einem Gehäuse (10, 26) auf. Diese sind von einem Motorkühlmittel (MKM) quer angeströmt, so dass das Abgas (AG) in einem indirekten Wärmetausch mit dem Motorkühlmittel (MKM) steht. Mindestens ein Teil der Kühlrohre ist von der Durchleitung des Abgases (AG) abtrennbar.

## Beschreibung

Die Erfindung betrifft einen Kühler für ein dem Hauptabgasstrom eines Verbrennungsmotors entnommenes Abgas.

Aus Gründen des Umweltschutzes werden die NOx-Emissionen von Kraftfahrzeugen sukzessive von Jahr zu Jahr reduziert. Um diesen Bestrebungen Rechnung zu tragen, können innermotorische Maßnahmen getroffen werden. Ferner kann die Reduzierung der NOx-Emissionen durch Lean-NOx-Katalysatoren oder durch Wassereinspritzung erreicht werden. Diese Maßnahmen erfordern jedoch entweder einen höheren Kraftstoffverbrauch oder einen zweiten Betriebsstoff.

Vorteilhafter demgegenüber ist jedoch die gekühlte Abgasrückführung. Dadurch lassen sich bei gleicher NOx-Emission die Partikelemissionen und der Kraftstoffverbrauch weiter senken. Erreicht wird dies dadurch, dass dem Hauptabgasstrom zwischen dem Motorauslass und der Turbine eines Turboladers Abgas entnommen, anschließend durch ein Motorkühlmittel gekühlt und letztlich der Frischluft nach einem Ladeluftkühler wieder beigemischt wird. Auf diese Weise wird ein Teil des Abgases zweimal verbrannt und es werden die gewünschten Senkungseffekte erreicht.

In diesem Zusammenhang werden bislang bevorzugt Plattenkühler eingesetzt, wobei an diese zusätzliche Kühlerregelventile angeflanscht sind. Diese Maßnahmen bedingen höhere Kosten durch zusätzliche Bauteile und als Folge auch höhere Gewichte. Außerdem wird durch die angeflanschten Kühlerregelventile ein größerer Bauraum benötigt.

Der Erfindung liegt - ausgehend vom Stand der Technik - die Aufgabe zugrunde, einen Kühler für ein dem Hauptabgasstrom eines Verbrennungsmotors zwischen dem Motorauslass und einer Turbine eines Turboladers entnommenes und nach der Kühlung der Frischluft nach einem Ladeluftkühler wieder beigemischtes Abgas zu schaffen, der hinsichtlich seiner Effizienz deutlich optimiert ist.

Diese Aufgabe wird mit den im Patentanspruch 1 angegebenen Merkmalen gelöst.

Durch die erfindungsgemäße Maßnahme, innerhalb eines Kühlers mindestens einen Teil der Kühlrohre von der Durchleitung des Abgases abtrennbar auszugestalten, kann dem Sachverhalt gezielt Rechnung getragen werden, dass der Motorbetrieb im kalten Zustand keine gekühlte Abgasrückführung erfordert. Mithin wird im Kühler kein oder nur ein stark eingeschränkter Wärmetausch durchgeführt. Derselbe Sachverhalt gilt auch für höhere Lastbereiche bei warmem Zustand eines Verbrennungsmotors.

Dadurch, dass jetzt mindestens ein Teil der Kühlrohre von der Durchleitung des Abgases abtrennbar ist, wird im Kühler für das Abgas gewissermaßen ein Bypass geschaffen, durch den sich die Abgasrückführung exakt auf die jeweiligen Betriebszustände eines Verbrennungsmotors einstellen lässt.

Eine Ausführungsform des grundsätzlichen Erfindungsgedankens sieht nach Patentanspruch 2 vor, dass an die Abgasleitung innerhalb des Kühlers U-förmige Kühlrohre mit ihren beiden Enden angeschlossen sind, wobei ein Ende der Kühlrohre zur Abgasleitung hin verschließbar ist. Im kalten Zustand eines Verbrennungsmotors oder in höheren Lastbereichen bei warmem Zustand werden mithin die Kühlrohre an mindestens einem Ende verschlossen, so dass das Abgas nicht durch die Kühlrohre strömen und gekühlt werden kann.

Vorteilhaft ist es in diesem Zusammenhang, wenn gemäß Patentanspruch 3 ein Ende der U-förmigen Kühlrohre durch eine Schwenkklappe verschließbar ist. Die Schwenkklappe ist zwischen zwei Positionen verstellbar. In der einen Position sperrt sie die Abgasleitung, so dass das Abgas durch die U-förmigen Kühlrohre strömt und von dem Motorkühlmittel gekühlt wird. Nachdem das Abgas die Kühlrohre durchströmt hat, gelangt es wieder in die Abgasleitung hinter der Schwenkklappe und von dort in den Frischluftstrom. Verschließt die Schwenkklappe ein Ende der U-förmigen Kühlrohre, strömt das gesamte Abgas ohne Kühlung durch die Abgasleitung.

Auch Zwischenstellungen der Schwenkklappe sind denkbar.

Eine weitere Ausführungsform des erfindungsgemäßen Grundgedankens sieht entsprechend den Merkmalen des Patentanspruchs 4 vor, dass an die Abgasleitung ein Zentralrohr größeren Durchmessers und neben dem Zentralrohr, insbesondere bündelweise, mehrere parallele Kühlrohre mit demgegenüber kleineren Durchmessern angeschlossen sind, wobei das Zentralrohr gegenüber der Abgasleitung verschließbar ist. Die Kühlrohre münden hierbei an dem der Abgasleitung abgewandten Ende in ein Reduzierstück, welches der Überführung des Abgases von den Kühlrohrbündeln in den Frischluftstrom dient.

Im Rahmen dieser Ausführungsform ist vorgesehen, dass der Strömungsquerschnitt des Zentralrohrs etwa dem Strömungsquerschnitt aller Kühlrohre entspricht. Wird das Zentralrohr gegenüber der Abgasleitung verschlossen, strömt das Abgas aus der Abgasleitung in die Kühlrohrbündel, wird hier von dem die Kühlrohre quer anströmenden Motorkühlmittel indirekt gekühlt und gelangt gekühlt in den Frischluftstrom.

Bei kaltem Motorbetrieb bzw. bei einem warmen Betriebszustand in höheren Lastbereichen wird keine Kühlung durchgeführt. Dann strömt das Abgas zum überwiegenden Teil durch das Zentralrohr und nur in geringen Mengen durch ein Kühlrohr.

Nach Patentanspruch 5 ist es zweckmäßig, wenn das Zentralrohr durch einen axial verlagerbaren Stopfen als Bestandteil eines Stopfenschiebers verschließbar ist. Der Stopfen verschließt das Zentralrohr, wenn eine Kühlung des Abgases durchgeführt werden soll.

Wenn nach Patentanspruch 6 Edelstahl als Werkstoff für den Kühler und seine Einzelteile verwendet wird, kann überdies auch noch die Korrosion merklich verringert werden.

Die Erfindung ist nachfolgend anhand von in den Zeichnungen dargestellten Ausführungsbeispielen näher erläutert. Es zeigen:
- Figur 1: im Schema einen Verbrennungsmotor mit einem Abgasturbolader und einer Abgasrückkühleinheit;
- Figur 2: im schematischen Längsschnitt einen Kühler für ein dem Hauptabgasstrom des Verbrennungsmotors entnommenes Abgas und
- Figur 3: ebenfalls im vertikalen Längsschnitt eine weitere Ausführungsform eines Kühlers für ein dem Hauptabgasstrom des Verbrennungsmotors entnommenes Abgas.

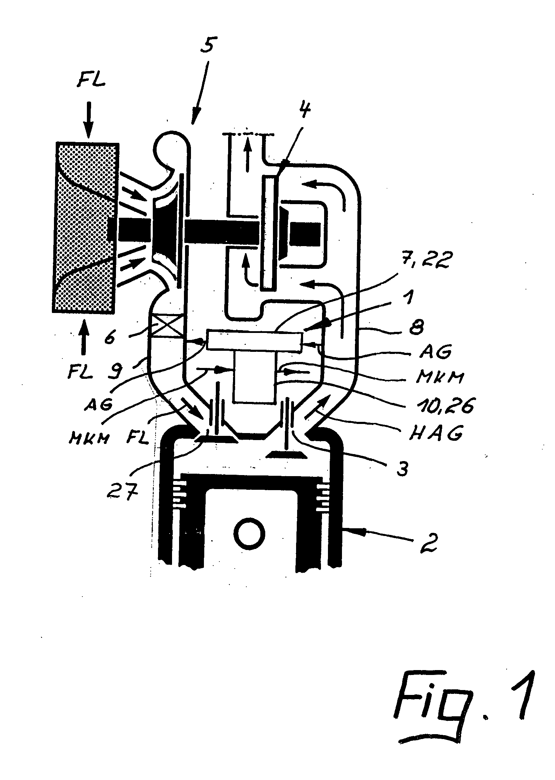

In der Figur 1 ist mit 1 ein schematisch dargestellter Kühler für ein dem Hauptabgasstrom HAG eines ebenfalls nur schematisch veranschaulichten Verbrennungsmotors 2 zwischen dem Motorauslass 3 und einer Turbine 4 eines Abgasturboladers 5 entnommenes und nach der Kühlung der Frischluft FL nach einem Ladeluftkühler 6 wieder beigemischtes Abgas AG bezeichnet.

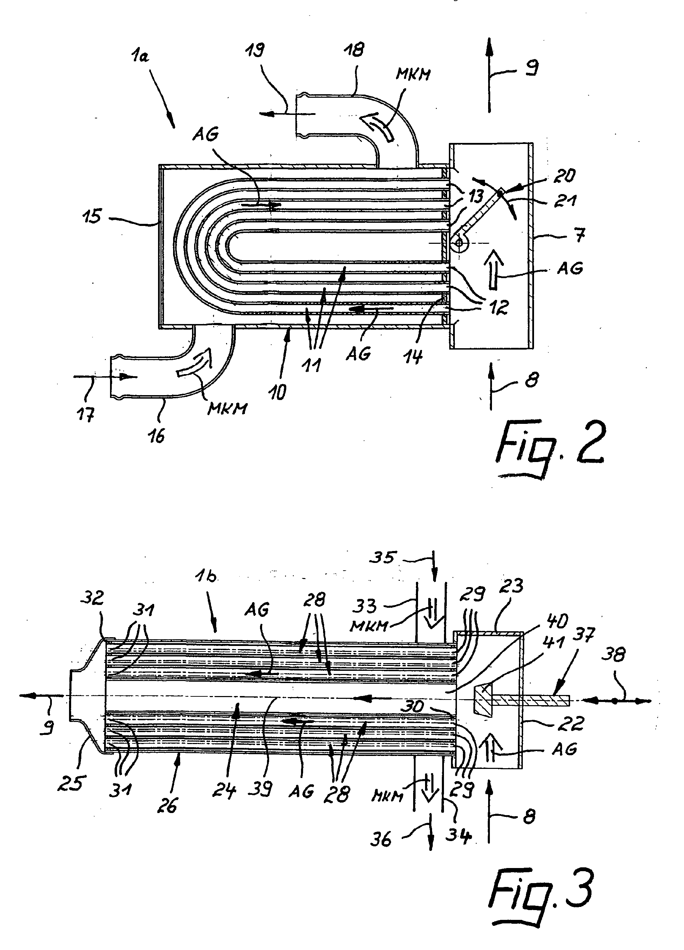

Der Kühler 1a gemäß der Ausführungsform der Figur 2 umfasst eine Abgasleitung 7, die einerseits an eine nur durch einen Pfeil veranschaulichte Leitung 8 zwischen dem Motorauslass 3 und der Turbine 4 und andererseits an eine ebenfalls nur durch einen Pfeil veranschaulichte Leitung 9 angeschlossen ist, welche die Frischluft FL nach dem Ladeluftkühler 6 führt (siehe auch Figur 1).

Die Abgasleitung 7 ist mit einem Gehäuse 10 verbunden, in welchem sich mehrere U-förmige Kühlrohre 11 erstrecken. Die Enden 12, 13 der Kühlrohre 11 sind zur Abgasleitung 7 hin offen. Umfangsseitig der Enden 12, 13 ist eine Trennwand 14 zwischen der Abgasleitung 7 und dem Gehäuse 10 vorgesehen. Das andere Ende des Gehäuses 10 ist durch eine Wand 15 ebenfalls verschlossen.

An das Gehäuse 10 ist ein Rohrstutzen 16 angeschlossen, über den gemäß dem Pfeil 17 ein Motorkühlmittel MKM in das Gehäuse 10 eingeführt wird, die Kühlrohre 11 quer anströmt und nach dem indirekten Wärmetausch mit dem in den Kühlrohren 11 geführten Abgas AG das Gehäuse 10 über einen weiteren bogenförmigen Rohrstutzen 18 entsprechend dem Pfeil 19 verlässt.

Die Enden 13 der Kühlrohre 11 sind durch eine Schwenkklappe 20 verschließbar. Die Schwenkklappe 20 ist gemäß dem bogenförmigen Doppelpfeil 21 zwischen einer Position, in der sie sich quer in der Abgasleitung 7 erstreckt und einer zweiten Position, in der sie die Enden 13 der Kühlrohre 11 verschließt, verstellbar. Die Verstellung steht bevorzugt unter dem Einfluss einer nicht näher veranschaulichten Steuerung.

Im kalten Zustand des Motorbetriebs ist keine Kühlung des Abgases AG erforderlich. In diesem Fall verschließt die Schwenkklappe 20 die Enden 13 der Kühlrohre 11, so dass das Abgas AG geradlinig durch die Abgasleitung 7 strömt. Derselbe Fall gilt für einen Betriebszustand im höheren Lastbereich bei warmem Zustand des Verbrennungsmotors 2.

In den anderen Betriebszuständen wird die Schwenkklappe 20 quer in die Abgasleitung 7 geschwenkt, so dass dann das Abgas AG über die Enden 12 in die U-förmigen Kühlrohre 11 strömt, dort in einen Wärmetausch mit dem Motorkühlmittel MKM gebracht wird, nach dem Durchströmen der Kühlrohre 11 über die Enden 13 wieder in die Abgasleitung 7 hinter der Schwenkklappe 20 gelangt und von hier aus der in der Leitung 9 strömenden Frischluft FL nach dem Ladeluftkühler 6 beigemischt wird.

Die in der Figur 3 veranschaulichte Ausführungsform eines Kühlers 1b für ein dem Hauptabgasstrom HAG des Verbrennungsmotors 2 zwischen dem Motorauslass 3 und der Turbine 4 entnommenes und nach der Kühlung der Frischluft FL nach dem Ladeluftkühler 6 wieder beigemischtes Abgas AG (siehe auch Figur 1) sieht ebenfalls eine Abgasleitung 22 vor. Die Abgasleitung 22 ist in nicht näher veranschaulichter Weise an die nur durch einen Pfeil 8 veranschaulichte Leitung zwischen dem Motorauslass 3 und der Turbine 4 angeschlossen. Das andere Ende 23 der Abgasleitung 22 ist verschlossen.

Von der Abgasleitung 22 aus erstreckt sich quer ein Zentralrohr 24, das in ein Reduzierstück 25 als Bestandteil eines Gehäuses 26 mündet. Das Reduzierstück 25 ist in nicht näher veranschaulichter Weise an die die Frischluft FL führende Leitung 9 zwischen dem Ladeluftkühler 6 und dem Motoreinlass 27 angeschlossen (Fig. 1).

Neben dem Zentralrohr 24 verlaufen mehrere gebündelte Kühlrohre 28 mit jeweils einem Durchmesser, der im Vergleich zu dem Durchmesser des Zentralrohrs 24 deutlich kleiner ist. Der Strömungsquerschnitt des Zentralrohrs 24 entspricht etwa dem gesamten Strömungsquerschnitt aller Kühlrohre 28.

Die Kühlrohre 28 erstrecken sich von der Abgasleitung 22 aus bis zum Reduzierstück 25.

An den der Abgasleitung 22 benachbarten Enden 29 der Kühlrohre 28 ist eine das Innere des Gehäuses 26 zur Abgasleitung 22 hin sperrende Trennwand 30 vorgesehen, während an den anderen Enden 31 der Kühlrohre 28 eine das Innere des Gehäuses 26 zum Reduzierstück 25 hin sperrende Trennwand 32 vorgesehen ist.

Des Weiteren ist aus der Figur 3 zu erkennen, dass das Gehäuse 26 über einen Zuführstutzen 33 und einen Abführstutzen 34 verfügt, über welche einerseits gemäß dem Pfeil 35 ein Motorkühlmittel MKM dem Inneren des Gehäuses 26 zugeführt und nach dem Wärmetausch mit Abgas AG gemäß dem Pfeil 36 wieder abgeführt wird.

In axialer Verlängerung des Zentralrohrs 24 erstreckt sich ein Stopfenschieber 37, der entsprechend dem Doppelpfeil 38 in der die Längsachse 39 des Zentralrohrs 24 schneidenden Ebene verlagerbar ist.

Bei Motorbetrieb im kalten Zustand sowie bei einem Betriebszustand des Verbrennungsmotors 2 in höheren Lastbereichen ist keine Kühlung des Abgases AG erforderlich. Der Stopfenschieber 37 wird so weit wie möglich von dem ihm benachbarten Ende 40 des Zentralrohrs 24 verlagert, so dass das Abgas AG nahezu vollständig aus der Leitung 8 über die Abgasleitung 22 und das Zentralrohr 24 in die Leitung 9 strömt.

In den übrigen Betriebszuständen des Verbrennungsmotors 2 wird hingegen der Stopfenschieber 37 entsprechend dem Doppelpfeil 38 so verlagert, dass der Stopfen 41 das Ende 40 des Zentralrohrs 24 verschließt. Das Abgas AG ist nunmehr gezwungen, nach dem Eintritt in die Abgasleitung 22 über die Enden 29 der Kühlrohre 28 in diese einzutreten und durch die Kühlrohre 28 zu strömen, bis es in das Reduzierstück 25 gelangt. Während dieses Strömungswegs befindet sich das Abgas AG im indirekten Wärmetausch mit dem Motorkühlmittel MKM. Es gelangt dann in gekühltem Zustand aus den Kühlrohren 28 in die Leitung 9 und wird hier der Frischluft FL nach dem Ladeluftkühler 6 wieder beigemischt (Figur 1).

### Bezugszeichenaufstellung

- 1 -: Kühler
- 1 a -: Kühler
- 1 b -: Kühler
- 2 -: Verbrennungsmotor
- 3 -: Motorauslass
- 4 -: Turbine v. 5
- 5 -: Abgasturbolader
- 6 -: Ladeluftkühler
- 7 -: Abgasleitung v. 1a
- 8 -: Leitung zw. 3 u. 4
- 9 -: Leitung zw. 6 u. 23
- 10 -: Gehäuse v. 1a
- 11 -: Kühlrohre in 10
- 12 -: Enden v. 11
- 13 -: Enden v. 11
- 14 -: Trennwand in 10
- 15 -: Wand v. 10
- 16 -: Rohrstutzen an 10
- 17 -: Pfeil
- 18 -: Rohrstutzen an 10
- 19 -: Pfeil
- 20 -: Schwenkklappe in 7
- 21 -: Doppelpfeil
- 22 -: Abgasleitung
- 23 -: Ende v. 22
- 24 -: Zentralrohr v. 1b
- 25 -: Reduzierstück v. 26
- 26 -: Gehäuse v. 1b
- 27 -: Motoreinlass
- 28 -: Kühlrohre in 1b
- 29 -: Enden v. 28
- 30 -: Trennwand
- 31 -: Enden von 28
- 32 -: Trennwand
- 33 -: Zuführstutzen
- 34 -: Abführstutzen
- 35 -: Pfeil
- 36 -: Pfeil
- 37 -: Stopfenschieber
- 38 -: Doppelpfeil
- 39 -: Längsachse v. 24
- 40 -: Ende v. 24
- 41 -: Stopfen v. 37

- AG -: Abgas
- FL -: Frischluft
- HAG -: Hauptabgasstrom
- MKM -: Motorkühlmittel

## Patentansprüche

1. Kühler für ein dem Hauptabgasstrom (HAG) eines Verbrennungsmotors (2) zwischen dem Motorauslass (3) und einer Turbine (4) eines Abgasturboladers (5) entnommenes und nach der Kühlung der Frischluft (FL) nach einem Ladeluftkühler (6) wieder beigemischtes Abgas (AG), welcher von einer Abgasleitung (7, 22) abzweigende Kühlrohre (11; 28) aufweist, die von einem Motorkühlmittel (MKM) quer angeströmt sind, wobei mindestens ein Teil der Kühlrohre (11; 28) von der Durchleitung des Abgases (AG) abtrennbar ist.

2. Kühler nach Patentanspruch 1, bei welchem an die Abgasleitung (7) U-förmige Kühlrohre (11) mit ihren beiden Enden (12, 13) angeschlossen sind, wobei ein Ende (13) der Kühlrohre (11) zur Abgasleitung (7) hin verschließbar ist.

3. Kühler nach Patentanspruch 2, bei welchem ein Ende (13) der U-förmigen Kühlrohre (11) durch eine Schwenkklappe (20) verschließbar ist.

4. Kühler nach Patentanspruch 1, bei welchem an die an einem Ende (23) verschlossene Abgasleitung (22) ein Zentralrohr (24) größeren Durchmessers und neben dem Zentralrohr (24) mehrere parallele Kühlrohre (28) mit demgegenüber kleineren Durchmessern angeschlossen sind, wobei das Zentralrohr (24) gegenüber der Abgasleitung (22) verschließbar ist.

5. Kühler nach Patentanspruch 4, bei welchem das Zentralrohr (24) durch einen axial verlagerbaren Stopfen (41) als Bestandteil eines Stopfenschiebers (37) verschließbar ist.

6. Kühler nach einem der Patentansprüche 1 bis 5, welcher aus Edelstahl besteht.
